# EUROPEAN PATENT SPECIFICATION

(11) **EP 4 156 378 B1**
(45) Date of publication and mention of the grant of the patent: **26.06.2024**
(21) Application number: 22186457.2
(22) Date of filing: 22.07.2022
(51) Int. Cl.: H01M 10/613, H01M 10/625, H01M 10/6556, H01M 10/6568, H01M 50/204

(54) **POWER STORAGE DEVICE**
STROMSPEICHERVORRICHTUNG
DISPOSITIF DE STOCKAGE D'ÉNERGIE

(30) Priority: 24.09.2021 JP 2021155391
(43) Date of publication of application: 29.03.2023
(73) Proprietor: TOYOTA JIDOSHA KABUSHIKI KAISHA, Toyota-shi, Aichi-ken, 471-8571 (JP)
(72) Inventor: MORI, Shinichiro, TOYOTA-SHI, AICHI-KEN, 471-8571 (JP)
(74) Representative: Cabinet Beau de Loménie

(56) References cited:
- JP-A- 2020 053 148
- US-A1- 2018 287 227

## Description

### BACKGROUND OF THE INVENTION

### 1. Field of the Invention

The disclosure relates to a power storage device installed in a vehicle.

### 2. Description of Related Art

In a known power storage device disclosed in Japanese Unexamined Patent Application Publication No. 2020-053148 (JP 2020-053148 A), power storage stacks and a cooler are located in a housing case. The cooler is formed by stacking a first plate (upper plate) made of metal and a second plate (lower plate) made of metal in the up-down direction, and joining the first and second plates by brazing, or the like. US 2018/287227 A1 discloses a power storage device comprising: a lower case (130) having a bottom portion a cooler (200) located below the bottom portion, wherein the cooler (30) includes a cooling portion having an end portion wherein the cooling portion of the cooler has an upper plate (210) and a lower plate (230) stacked in the up-down direction.

### SUMMARY OF THE INVENTION

A power storage device in which the cooler is located outside the housing case is considered. In this case, when a vehicle equipped with the power storage device travels in the rain or over puddles, the cooler is more likely to be subjected to water. In this case, when no measure is taken, there is a concern that liquid such as water attaches to end portions of the upper plate and lower plate joined together, and the area near the joint of the upper plate and lower plate rusts, starting from the area to which the liquid attaches. In this case, the coolant flowing in the cooler may leak from the rusted area. The invention is defined in the appended set of claims.

The disclosure provides a power storage device in which a cooler having a cooling portion where an upper plate and a lower plate are joined together is located outside a lower case, and attachment of liquid to an area near the joint of the upper plate and lower plate can be curbed.

A power storage device based on the disclosure includes a lower case having a bottom portion provided with a protrusion that protrudes downward, and a cooler located below the bottom portion. The cooler includes a cooling portion having an end portion that faces the protrusion in a first direction perpendicular to an up-down direction. The cooling portion has an upper plate and a lower plate stacked in the up-down direction. The upper plate and the lower plate are joined at respective joint surfaces in the end portion. The lower plate has an extended portion that extends toward the protrusion further than the upper plate in the end portion.

With the above arrangement, when liquid from the outside hits against the protrusion on the lower side of the lower case, the liquid moving upward can be repelled downward by the extended portion. Thus, the liquid is less likely or unlikely to attach to the area near the joint of the upper plate and the lower plate, and rusting at the area near the joint of the upper plate and the lower plate can be curbed.

In the power storage device based on the disclosure, the upper plate may have a brim portion having one of the joint surfaces, and an inclined portion that is connected to the brim portion from a side opposite to a side on which the protrusion is located, and is directed upward in a direction opposite to the side on which the protrusion is located.

With the above arrangement, when dew condensation water appears in the cooling portion, the inclined portion can cause the dew condensation water to flow toward the extended portion. Thus, the dew condensation water can be retained at the distal end of the extended portion.

In the power storage device based on the disclosure, the cooling portion may have a first end and a second end in a second direction perpendicular to the up-down direction and the first direction. In this case, the extended portion may be provided at each of the first end side and the second end side.

With the above arrangement, attachment of the liquid to the area near the joint of the upper plate and the lower plate can be curbed at the first end side and the second end side in the second direction. In particular, when the power storage device is installed in the vehicle such that the second direction is parallel to the width direction of the vehicle, the liquid from the outside is likely to be repelled by the protrusions at the opposite end sides in the second direction as the vehicle vibrates. Thus, it is possible to effectively curb attachment of water to the area near the joint of the upper plate and the lower plate, while limiting the installation position of the extended portion and reducing the installation area of the extended portion.

The power storage device based on the disclosure may include a panel that covers the protrusion and the cooler from the lower side.

With the above arrangement, the cooler is covered with the panel, so that the cooler is less likely or unlikely to be directly subjected to liquid from the outside, and the liquid from the outside, which enters between the panel and the cooler, can be made less likely or unlikely to attach to the area near the joint of the upper plate and the lower plate.

According to the disclosure, the power storage device can be provided in which the cooler having the cooling portion where the upper plate and the lower plate are joined together is located outside the lower case, and attachment of liquid to the area near the joint of the upper plate and the lower plate can be curbed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is an exploded perspective view of a power storage device according to one embodiment;
FIG. 2 is a plan view of a cooler according to the embodiment;
FIG. 3 is a perspective view showing a lower case to which the cooler according to the embodiment is fixed, as viewed from the bottom side;
FIG. 4 is a cross-sectional view taken along line IV-IV shown in FIG. 3;
FIG. 5 is a view useful for describing the manner of repelling liquid by extended portions of the cooler according to the embodiment; and
FIG. 6 is a view useful for describing the flow of dew condensation water in the cooler according to the embodiment.

### DETAILED DESCRIPTION OF EMBODIMENTS

One embodiment of the disclosure will be described in detail with reference to the drawings. In the drawings, the same reference signs are assigned to the same or common components or portions in the embodiment below, and the components or portions will not be repeatedly described.

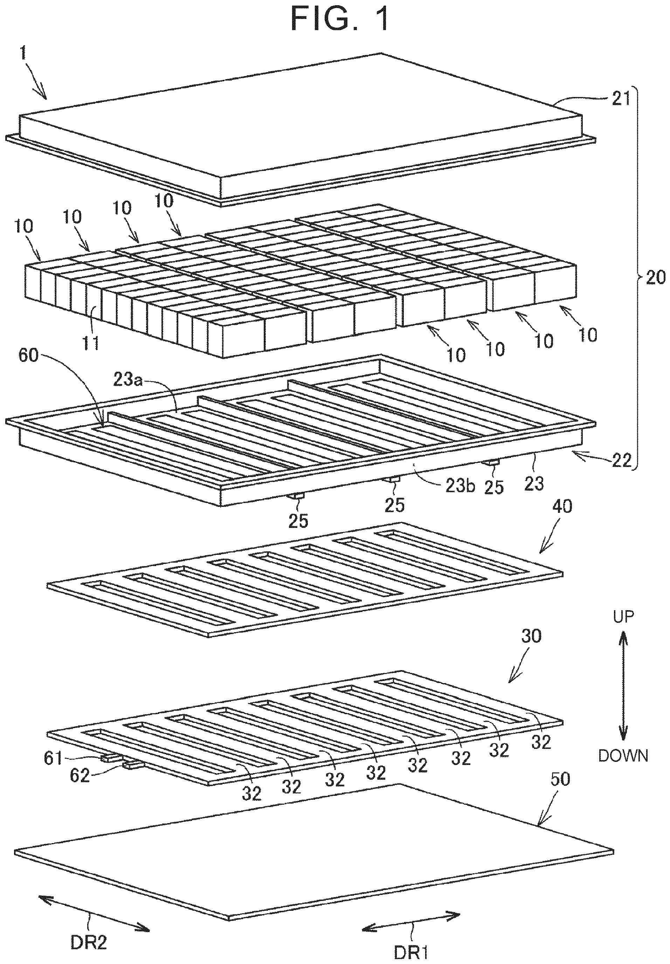

FIG. 1 is an exploded perspective view of a power storage device according to the embodiment. Referring to FIG. 1, the power storage device 1 according to the embodiment will be described.

The power storage device 1 of the embodiment is installed in a hybrid electric vehicle that can travel using power of at least one of a motor and an engine, or an electrified vehicle that travels with driving force obtained by electric energy. The power storage device 1 is mounted below a floor panel of the vehicle, for example.

As shown in FIG. 1, the power storage device 1 includes a plurality of power storage stacks 10, a housing case 20, a cooler 30, a heat conduction member 40, a shared panel 50, and inside heat conduction layers 60.

The power storage stacks 10 are arranged in a first direction (DR1 direction) perpendicular to the up-down direction. The first direction is parallel to the longitudinal direction of the vehicle when the power storage device 1 is in an installed state where it is installed in the vehicle.

Each of the power storage stacks 10 includes a plurality of power storage cells 11 arranged in a second direction (DR2 direction) perpendicular to the up-down direction and the first direction. The second direction is parallel to the width direction of the vehicle in the above-mentioned installed state.

The power storage cell 11 is a secondary battery such as a nickel hydride battery or a lithium-ion battery, for example. The power storage cell 11 has a rectangular shape, for example. The power storage cell 11 may use a liquid electrolyte or may use a solid electrolyte. The power storage cell 11 may be a unit capacitor configured to store electricity.

The housing case 20 houses the power storage stacks 10. The housing case 20 includes an upper case 21 and a lower case 22.

The upper case 21 has a generally box-like shape that is open downward. The upper case 21 may be formed of a metal material. The upper case 21 may also be formed of a resin material for reduction of the weight.

The lower case 22 has a generally box-like shape that is open upward. The lower case 22 is formed of a metal material. The lower case 22 preferably has good thermal conductivity.

The lower case 22 has a bottom portion 23. The power storage stacks 10 are mounted on the bottom portion 23. The bottom portion 23 has an inner surface 23a and an outer surface 23b that face in opposite directions. The inner surface 23a faces the power storage stacks 10. The outer surface 23b faces the side opposite to the side on which the power storage stacks 10 are located.

The bottom portion 23 is provided with a plurality of protrusions 25 that protrude downward. The protrusions 25 are arranged at given intervals in the first direction. The protrusions 25 enter gaps between cooling portions 32 (that will be described later) located adjacent to each other, at predetermined positions. The protrusions 25 extend in the second direction.

The inside heat conduction layer 60 is placed between each power storage stack 10 and the inner surface 23a. The inside heat conduction layer 60, which also functions as an adhesive layer, bonds and fixes each power storage stack 10 to the bottom portion 23. Each power storage stack 10 is in thermal contact with the inner surface 23a via the inside heat conduction layer 60.

The inside heat conduction layer 60 is formed of a resin material having thermal conductivity. As the inside heat conduction layer 60, an adhesive containing silicone resin, acrylic resin, urethane resin, or epoxy resin, for example, may be employed.

The cooler 30 is a device for cooling the power storage stacks 10. A coolant channel through which a coolant flows is provided inside the cooler 30. The coolant channel is connected to a coolant inlet 61 and a coolant outlet 62. The coolant introduced from the coolant inlet 61 into the coolant channel cools the power storage stacks 10, and is discharged from the coolant outlet 62.

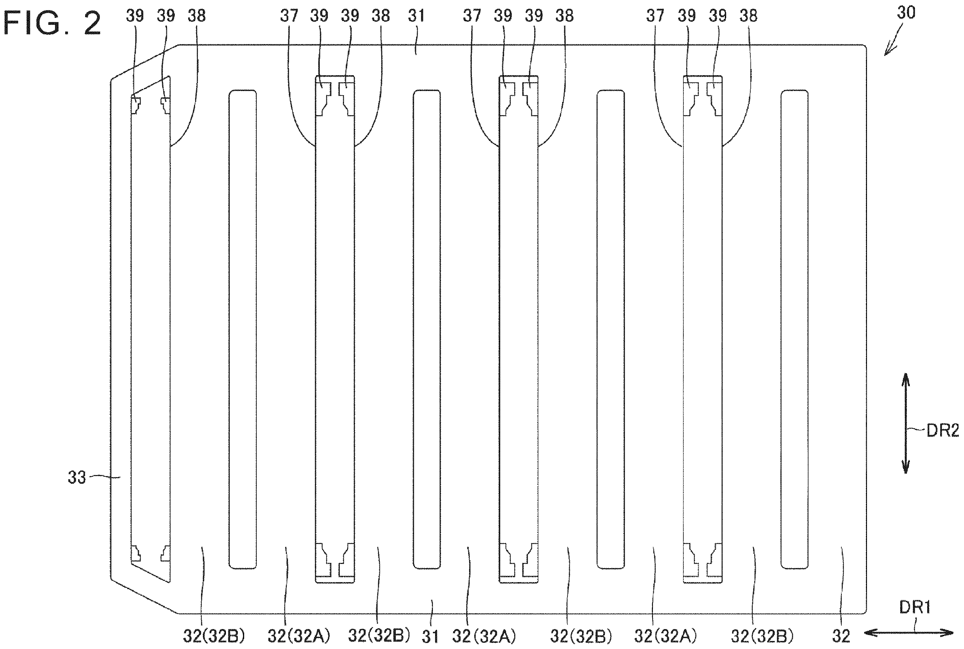

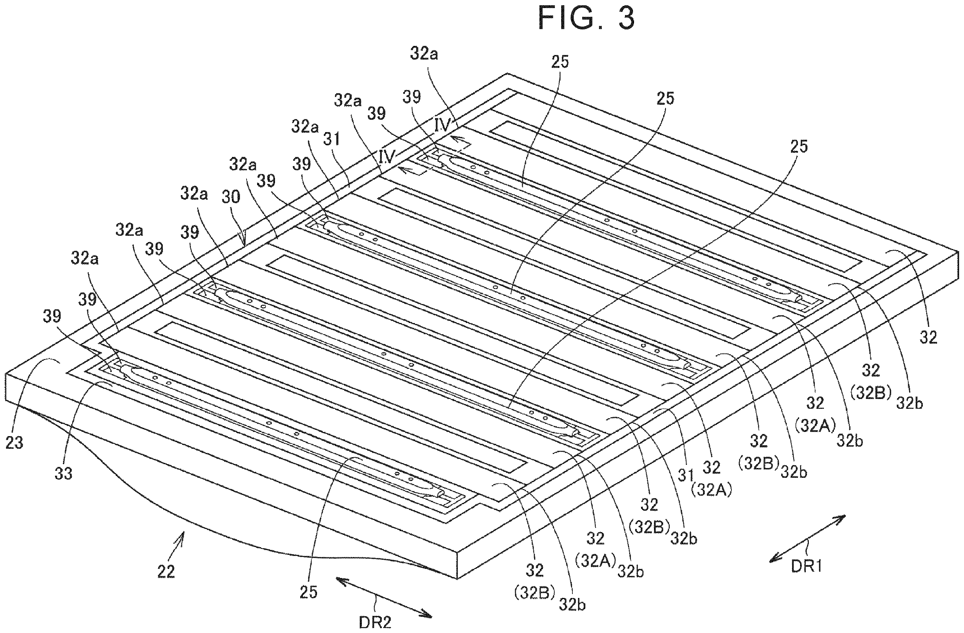

The cooler 30 is located below the bottom portion 23 of the lower case 22. The cooler 30 is formed of a metal material such as aluminum. The detailed structure of the cooler 30 will be described later using FIG. 2 and FIG. 3.

The heat conduction member 40 is placed between the outer surface 23b of the bottom portion 23 and the cooler 30. The power storage stacks 10 are cooled by the cooler 30, via the heat conduction member 40, the bottom portion 23, and the inside heat conduction layers 60. The heat conduction member 40 also functions as an adhesive layer that bonds the bottom portion 23 and the cooler 30. As the heat conduction member 40, an adhesive containing silicone resin, acrylic resin, urethane resin, or epoxy resin, for example, may be employed.

The shared panel 50 is positioned to cover the protrusions 25 and the cooler 30 from the lower side. The shared panel 50 protects the cooler 30, and also curbs exposure of the cooler 30 to water. The shared panel 50 is formed of a metal material.

FIG. 2 is a plan view of the cooler according to the embodiment. FIG. 3 is a perspective view showing the lower case to which the cooler of the embodiment is fixed as viewed from the bottom side of the lower case. In FIG. 3, the shared panel 50 is omitted for convenience. Referring to FIG. 2 and FIG. 3, the detailed structure of the cooler 30 according to the embodiment will be described.

The cooler 30 includes a pair of holding portions 31, a plurality of cooling portions 32, and a front portion 33. The coolant channel is routed inside the holding portions 31, the cooling portions 32, and the front portion 33.

The pair of holding portions 31 extend in the first direction. The holding portions 31 are positioned to be spaced apart from each other in the second direction. The holding portions 31 hold the cooling portions 32.

The cooling portions 32 are positioned in one-to-one correspondence with the power storage stacks 10. The number of the cooling portions 32 corresponds to the number of the power storage stacks 10. Each of the cooling portions 32 connects the holding portions 31 in the second direction. The cooling portions 32 are arranged at given intervals in the first direction.

The cooling portions 32 include cooling portions 32A, 32B having end portions 37, 38 facing the protrusions 25. Each of the cooling portions 32A is located on one side of the corresponding protrusion 25 in the first direction. Each of the cooling portions 32B is located on the other side of the protrusion 25 in the first direction. Namely, each of the protrusions 25 is located between the cooling portion 32A and the cooling portion 32B. The cooling portions 32A, 32B have extended portions 39.

Each of the cooling portions 32A, 32B has a first end 32a and a second end 32b in the second direction. The extended portions 39 are provided on the first end 32a side and the second end 32b side.

The front portion 33 protrudes from one end of the pair of holding portions 31 to one side in the first direction. The front portion 33 has a generally C-shape. The coolant inlet 61 and coolant outlet 62 described above are provided on the front portion 33.

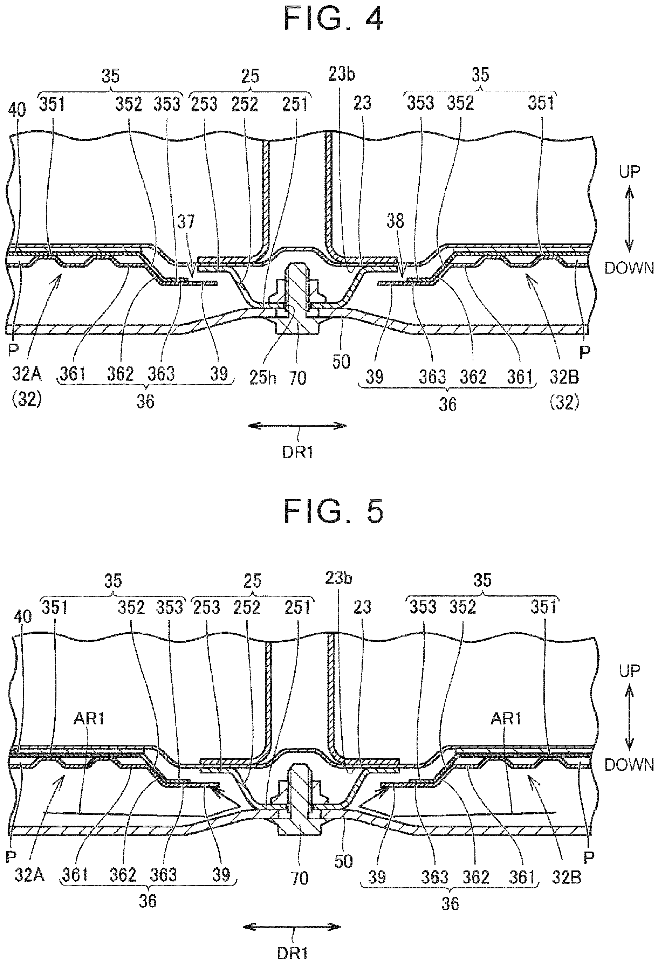

FIG. 4 is a cross-sectional view taken along line IV-IV shown in FIG. 3. In FIG. 4, the shared panel 50 that is not illustrated in FIG. 3 is illustrated for convenience.

As shown in FIG. 4, the protrusion 25 has a bottom plate portion 251, a pair of side wall portions 252, and a pair of flange portions 253. The bottom plate portion 251 forms the bottom of the protrusion 25. A hole 25h is provided in the bottom plate portion 251. A fastening member 70 such as a bolt is inserted through the hole 25h so that the shared panel 50 is fixed in position.

The side wall portions 252 are connected to the opposite ends of the bottom plate portion 251 in the first direction. The side wall portions 252 are opposed to each other in the first direction. The side wall portions 252 are inclined such that the distance between them as measured in the first direction increases in the upward direction. The side wall portions 252 extend in the second direction.

The flange portions 253 are connected to end portions of the side wall portions 252 located opposite to the side on which the bottom plate portion 251 is located. The flange portions 253 are connected to the upper ends of the side wall portions 252. The flange portions 253 are generally in parallel with the first direction. The flange portions 253 are fixed to the outer surface 23b by welding, or the like.

The end portion 37 of the cooling portion 32A faces one of the pair of side wall portions 252 located on one side in the first direction. The end portion 38 of the cooling portion 32B faces the other of the pair of side wall portion 252 located on the other side in the first direction.

The cooling portion 32 includes an upper plate 35 and a lower plate 36. The upper plate 35 and lower plate 36 are stacked in the up-down direction. The upper plate 35 and the lower plate 36 are joined at their joint surfaces, in the end portions 37, 38. The upper plate 35 and the lower plate 36 are joined by brazing, for example.

The upper plate 35 has a plate portion 351, an inclined portion 352, and a brim portion 353. The plate portion 351 is formed substantially flat. The heat conduction member 40 is formed on the plate portion 351. The brim portion 353 forms an end portion of the upper plate 35 located on the other side in the first direction. The brim portion 353 is formed substantially flat. The brim portion 353 is generally in parallel with the first direction. The joint surface described above is formed on the brim portion 353.

The inclined portion 352 connects the plate portion 351 with the brim portion 353. The inclined portion 352 is connected to an end portion of the brim portion 353 located on the side opposite to the side on which the protrusion 25 is located. The inclined portion 352 is inclined to be directed upward in a direction opposite to the side on which the protrusion 25 is located. The joint surface may be formed on a portion of the lower surface of the inclined portion 352 located close to the brim portion 353.

The lower plate 36 has a plate portion 361, an inclined portion 362, a brim portion 363, and extended portion 39. The plate portion 361 is formed with recesses and projections. Thus, in a condition where the plate portion 351 and the plate portion 361 are superposed on each other in the up-down direction, clearances are formed between the upper plate 35 and the lower plate 36, and the clearances form the coolant channel P.

The brim portion 363 is provided at a position corresponding to the brim portion 353, and is superposed on the brim portion 353. The brim portion 363 is formed substantially flat. The brim portion 363 is generally in parallel with the first direction. The joint surface described above is formed on the brim portion 363.

The inclined portion 362 connects the plate portion 361 with the brim portion 363. The inclined portion 362 is connected to an end portion of the brim portion 363 located on the side opposite to the side on which the protrusion 25 is located. The inclined portion 362 is inclined to be directed upward in a direction opposite to the side on which the protrusion 25 is located. The inclined portion 362 extends along the inclined portion 352. The joint surface may be formed at the upper surface of the inclined portion 362.

The extended portions 39 extend toward the protrusion 25 further than the upper plates 35, in the end portions 37, 38. The extended portion 39 is connected to the distal end of the brim portion 363. The extended portion 39 is extended from the brim portion 363 toward the protrusion 25. The extended portion 39 is generally in parallel with the second direction.

The distal end of the extended portion 39 faces the side wall portion 252 in the first direction. The distal end portion of the extended portion 39 overlaps the flange portion 253 as viewed in the up-down direction.

Referring to FIG. 5, the manner in which liquid is repelled by the extended portions of the cooler according to the embodiment will be described. FIG. 5 is a cross-sectional view of the power storage device at the position corresponding to FIG. 4. Referring to FIG. 5, the function of the extended portion 39 will be described.

When liquid such as water enters between the shared panel 50 and the cooler 30, as shown in FIG. 5, the liquid may move upward as it hits against and bounces off the side wall portion 252 of the protrusion 25 as indicated by arrow AR1 during traveling of the vehicle. In this case, the extended portions 39 provided as described above can repel the liquid moving upward, back to the lower side. Thus, the liquid is less likely or unlikely to attach to the area near the joint of the upper plate 35 and the lower plate 36 that are joined at the joint surfaces. As a result, corrosion of the upper plate 35 and the lower plate 36 at the area near the joint can be curbed, and leakage of the coolant from the corroded area can be curbed.

As described above, the extended portions 39 are provided on the first end 32a side and the second end 32b side. The first end 32a and the second end 32b are located on the opposite sides in the width direction of the vehicle. When the vehicle vibrates, the liquid is likely to move as indicated by arrow AR1, particularly at the opposite sides in the width direction of the vehicle. Thus, the extended portions 39 thus provided on the first end 32a side and the second end 32b side can effectively curb attachment of the liquid to the areas near the joints, while reducing the installation areas of the extended portions 39.

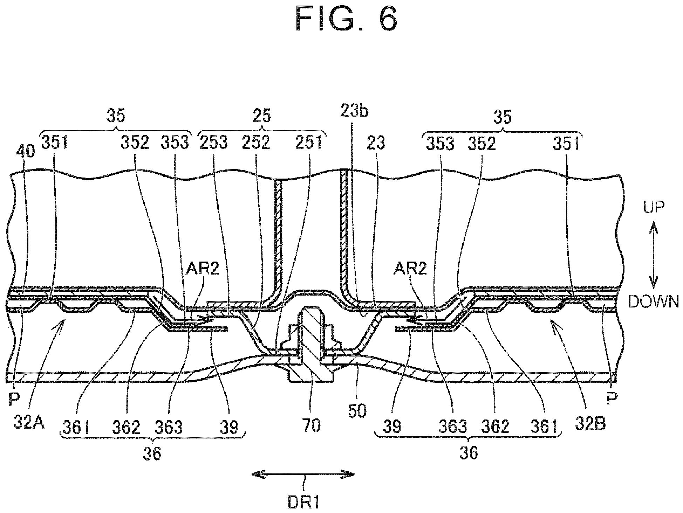

Referring to FIG. 6, the flow of dew condensation water in the cooler according to the embodiment will be described. FIG. 6 is a cross-sectional view of the power storage device at the position corresponding to FIG. 4.

As shown in FIG. 6, when dew condensation water appears around the cooling portion 32, the inclined portion 352 can cause the dew condensation water to flow toward the extended portion 39, as indicated by arrow AR2. As a result, the dew condensation water can be retained at the distal end of the extended portion 39 away from the area near the joint.

The embodiment disclosed herein is merely exemplary in all respects and is not restrictive. The scope of the invention is defined by claims.

## Claims

1. A power storage device (1) comprising:
a lower case (22) having a bottom portion (23) provided with a protrusion (25) that protrudes downward; and
a cooler (30) located below the bottom portion (23),
wherein the cooler (30) includes a cooling portion (32A) having an end portion (37) that faces the protrusion (25) in a first direction perpendicular to an up-down direction,
wherein the cooling portion (32A) has an upper plate (35) and a lower plate (36) stacked in the up-down direction,
wherein the upper plate (35) and the lower plate (36) are joined at respective joint surfaces in the end portion (37), and
wherein the lower plate (36) has an extended portion (39) that extends toward the protrusion (25) further than the upper plate (35) in the end portion (37).

2. The power storage device (1) according to claim 1, wherein the upper plate (35) has a brim portion (353) having one of the joint surfaces, and an inclined portion (352) that is connected to the brim portion (353) from a side opposite to a side on which the protrusion (25) is located, and is directed upward in a direction opposite to the side on which the protrusion (25) is located.

3. The power storage device (1) according to claim 1 or 2, wherein:
the cooling portion (32A) has a first end (32a) and a second end (32b) in a second direction perpendicular to the up-down direction and the first direction; and
the extended portion (39) is provided at each of the first end (32a) side and the second end (32b) side of the cooling portion (32A).

4. The power storage device (1) according to any one of claims 1 to 3, further comprising a panel (50) that covers the protrusion (25) and the cooler (30) from a lower side.

## Patentansprüche

1. Energiespeichervorrichtung (1), umfassend:
ein unteres Gehäuse (22), das einen Bodenabschnitt (23) aufweist, das mit einem Vorsprung (25) versehen ist, der nach unten hervorsteht; und
einen Kühler (30), der sich unterhalb des Bodenabschnitts (23) befindet,
wobei der Kühler (30) einen Kühlabschnitt (32A) beinhaltet, der einen Endabschnitt (37) aufweist, der dem Vorsprung (25) in einer ersten Richtung senkrecht zu einer Aufwärts/Abwärts-Richtung zugewandt ist,
wobei der Kühlabschnitt (32A) eine obere Platte (35) und eine untere Platte (36) aufweist, die in der Aufwärts/Abwärts-Richtung gestapelt sind,
wobei die obere Platte (35) und die untere Platte (36) an entsprechenden Verbindungsflächen in dem Endabschnitt (37) verbunden sind, und
wobei die untere Platte (36) einen verlängerten Abschnitt (39) aufweist, der sich weiter in Richtung des Vorsprungs (25) erstreckt als die obere Platte (35) in dem Endabschnitt (37).

2. Energiespeichervorrichtung (1) nach Anspruch 1, wobei die obere Platte (35) einen Randabschnitt (353), der eine der Verbindungsflächen aufweist, und einen geneigten Abschnitt (352), der mit dem Randabschnitt (353) von einer Seite gegenüber einer Seite, auf der sich der Vorsprung (25) befindet, und der in einer Richtung gegenüber der Seite, auf der sich der Vorsprung (25) befindet, nach oben gerichtet ist, aufweist.

3. Energiespeichervorrichtung (1) nach Anspruch 1 oder 2, wobei:
der Kühlabschnitt (32A) ein erstes Ende (32a) und ein zweites Ende (32b) in einer zweiten Richtung senkrecht zu der Aufwärts/Abwärts-Richtung und der ersten Richtung aufweist; und
der verlängerte Abschnitt (39) an jeder von der Seite des ersten Endes (32a) und der Seite des zweiten Endes (32b) des Kühlabschnitts (32A) bereitgestellt ist.

4. Energiespeichervorrichtung (1) nach einem der Ansprüche 1 bis 3, ferner umfassend eine Platte (50), die den Vorsprung (25) und den Kühler (30) von einer Unterseite abdeckt.

## Revendications

1. Dispositif de stockage d'énergie (1) comprenant :
un boîtier inférieur (22) ayant une partie inférieure (23) prévue avec une saillie (25) qui fait saillie vers le bas ; et
un refroidisseur (30) positionné au-dessous de la partie inférieure (23),
dans lequel le refroidisseur (30) comprend une partie de refroidissement (32A) ayant une partie d'extrémité (37) qui fait face à la saillie (25) dans une première direction perpendiculaire à une direction de haut en bas,
dans lequel la partie de refroidissement (32A) a une plaque supérieure (35) et une plaque inférieure (36) empilées dans la direction de haut en bas,
dans lequel la plaque supérieure (35) et la plaque inférieure (36) sont assemblées au niveau de surfaces de joint respectives dans la partie d'extrémité (37), et
dans lequel la plaque inférieure (36) a une partie étendue (39) qui s'étend vers la saillie (25) davantage que la plaque supérieure (35) dans la partie d'extrémité (37).

2. Dispositif de stockage d'énergie (1) selon la revendication 1, dans lequel la plaque supérieure (35) a une partie de bord (353) ayant l'une des surfaces de joint et une partie inclinée (352) qui est raccordée à la partie de bord (353) à partir d'un côté opposé à un côté sur lequel la saillie (25) est positionnée, et est dirigée vers le haut dans une direction opposée au côté sur lequel la saillie (25) est positionnée.

3. Dispositif de stockage d'énergie (1) selon la revendication 1 ou 2, dans lequel :
la partie de refroidissement (32A) a une première extrémité (32a) et une deuxième extrémité (32b) dans une deuxième direction perpendiculaire à la direction de haut en bas et à la première direction ; et
la partie étendue (39) est prévue au niveau de chacun parmi le côté de la première extrémité (32a) et le côté de la deuxième extrémité (32b) de la partie de refroidissement (32A).

4. Dispositif de stockage d'énergie (1) selon l'une quelconque des revendications 1 à 3, comprenant en outre un panneau (50) qui recouvre la saillie (25) et le refroidisseur (30) depuis un côté inférieur.
